(19) Europäisches Patentamt / European Patent Office / Office européen des brevets

(11) **EP 1 919 141 A1**

(12) **EUROPEAN PATENT APPLICATION**

(43) Date of publication:
**07.05.2008 Bulletin 2008/19**

(51) Int Cl.:
***H04L 12/56*** (2006.01)

(21) Application number: **07117580.6**

(22) Date of filing: **28.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **02.11.2006 US 856041**
**22.12.2006 US 643811**

(71) Applicant: **FUJITSU LIMITED**
**Kawasaki-shi,**
**Kanagawa 211-8588 (JP)**

(72) Inventors:
• **Viorel, Dorin**
  **c/o FUJITSU LIMITED,**
  **Kawasaki-shi, Kanagawa 211-8588 (JP)**
• **Cameron, Fraser**
  **c/o FUJITSU LIMITED,**
  **Kawasaki-shi, Kanagawa 211-8588 (JP)**

(74) Representative: **Wilding, Frances Ward**
**Haseltine Lake**
**Lincoln House**
**300 High Holborn**
**London WC1V 7JH (GB)**

(54) **Determining transmitting stations in an OFDMA network**

(57) Preamble modulation codes in an OFDMA network are assigned to one of at least two groups, one of the groups indicating that codes assigned to the group are for base stations in the network and a different one of the groups indicating that codes assigned to the group are for relay stations in the network. A mobile station attempting to enter or re-enter the network receives a signal transmitted from a station in the network and determines whether the station that transmitted the received signal is a base station or a relay station based on the group to which the preamble modulation code of the received signal was assigned.

ASSIGN PREAMBLE MODULATION CODES TO GROUPS

RECEIVE A SIGNAL TRANSMITTED FROM A STATION

DETERMINE WHETHER THE STATION IS A BASE STATION OR RELAY STATION

FIG. 2

EP 1 919 141 A1

**Description**

CROSS-REFERENCE TO RELATED APPLICATIONS

The present application claims priority to provisional application titled "Method for Optimizing the Network Entry and Handover Procedures of the Mobile Stations Operating in OFDMA Networks", serial number 60/856,041, filed November 2, 2006, inventors Dorin Viorel and Fraser Cameron, attorney docket number 1974.1002P, and which is incorporated herein by reference.

BACKGROUND OF THE INVENTION

Description of the Related Art

Wireless communication networks have become increasingly popular and generally include a base station that provides service to a cell area located around the base station. Mobile stations (such as cell phones, etc.) are able to communicate with the base station when they are within the service area of the base station. In certain types of wireless communication networks, such as, for example, those based on the Institute of Electrical and Electronics Engineers (IEEE) 802.16 standard, "last mile" connectivity of mobile stations within the network is the focus. In order for the mobile stations to identify the base station and attempt to register with the base station within a given service area, the base station will transmit a signal that includes a robust preamble. The preamble generally has a low sensitivity threshold and is not provided for transmitting data, but instead is used for identifying the base station, such that the base station can be synchronized with a mobile station seeking service within the cell area. The mobile station is provided with a preamble detector that receives the robust preamble from the base station and identifies the signal as being from a base station based on a cell ID that is modulated in the preamble.

However, in wireless communication, due to such effects as shadowing arising from blockage by buildings and other obstructions between transmission/reception antennas, there exist dead zones in which communication with the base station is not possible, despite being within the service area. To combat this problem, in an Orthogonal Frequency Division Multiple Access (OFDMA) network, relay stations could be employed for providing enhanced transmission capabilities by acting as intermediaries between mobile stations operating in a given cell of the network and the related servicing base station. These relay stations also transmit signals that include robust preambles that identify the stations as relay stations to other stations receiving the signal. In this manner, a mobile station that is incapable of connecting directly to a base station within its cell service area may still connect indirectly to the base station by first synchronizing and communicating with a relay station that does have a direct link to the base station.

However, a mobile station attempting to execute a network entry or a hard handover procedure in a network with relay stations will generally use the same preamble signal detector algorithm as a standard compliant mobile station employed in a network without relay stations, therefore making it impossible for the mobile station attempting the network entry or hard handover to differentiate between a base station in the network and a relay station in the network.

As such, a mobile station attempting to execute a network entry or a hard handover procedure may attempt to make a sub-optimal connection to another relay station in the network, instead of connecting directly to the base station that is within its range, as is desired. If this occurs, the mobile station attempting to execute a network entry or a hard handover procedure will exchange data with the base station through a link between the other relay station and the base station, thereby degrading the bandwidth efficiency of the link between the other relay station and the base station and increasing the time required for connection, due to the supplementary data and control traffic requested by the relay station attempting to execute a network entry or a hard handover procedure and its assigned mobile stations. Furthermore, a relay station may not be able to provide the same range of services and capabilities of a base station.

The invention is defined in the independent claims, to which reference should now be made. Advantageous embodiments are set out in the sub claims.

Various embodiments of the present invention provide a method which includes (a) assigning preamble modulation codes employed in an Orthogonal Frequency Division Multiple Access (OFDMA) network to one of at least two groups, one of the groups indicating that codes assigned to the group are for base stations in the network and a different one of the groups indicating that codes assigned to the group are for relay stations in the network; (b) receiving, by a mobile station operating in the network, a signal transmitted from an unidentified station in the network, the received signal including a preamble modulation code; and (c) determining, by the mobile station receiving the signal, whether the unidentified station that transmitted the received signal is a base station or a relay station based on the group to which the preamble modulation code of the received signal was assigned.

Various embodiments of the present invention provide a method which includes (a) detecting, by a mobile station, a preamble modulation code of a signal transmitted by an unidentified station in an Orthogonal Frequency Division Multiple Access (OFDMA) network; and (b) determining, by the mobile station, whether the unidentified station is a base station or a relay station based on a group to which the detected preamble modulation code is assigned.

Various embodiments of the present invention provide a mobile station including (a) means for detecting, by the mobile station, a PN sequence of a signal transmitted by an unidentified station in an Orthogonal Frequency Division Multiple Access (OFDMA) network; and (b) means for determining, by the mobile station, whether the unidentified station is a base station or a relay station based on a group to which the detected PN sequence was assigned.

The above embodiments of the present invention are simply examples, and all embodiments of the present invention are not limited to these examples.

Additional advantages of the invention will be set forth in part in the description which follows, and, in part, will be obvious from the description, or may be learned by practice of the invention.

BRIEF DESCRIPTION OF THE DRAWINGS

These and other objects and advantages of the invention will become apparent and more readily appreciated from the following description of the preferred embodiments, taken in conjunction with the accompanying drawings of which:

Fig. 1 is an illustration of an example of an inter-cell topology involving two relay stations and three mobile stations operating in an OFDMA network under the 802.16 standard.

Fig. 2 is a flowchart illustrating the method of a mobile station attempting to execute a network entry or a hard handover procedure, according to an embodiment of the present invention.

Fig. 3 is a flowchart illustrating the method of a mobile station attempting to execute a network entry or a hard handover procedure, according to an embodiment of the present invention.

Fig. 4 is an illustration of an example of a tier 1+2 wireless network topology for modeling the assignment of preamble modulation codes in an OFDMA network, according to an embodiment of the present invention.

Fig. 5 is chart illustrating the assignment of preamble modulation codes into a group indicating relation to a base station and a group indicating relation to a relay station, according to an embodiment of the present invention.

DETAILED DESCRIPTION OF THE PREFERRED EMBODIMENTS

Reference will now be made in detail to the present preferred embodiments of the present invention, examples of which are illustrated in the accompanying drawings, wherein like reference numerals refer to like elements throughout.

Various embodiments of the present invention provide a mobile station attempting to execute a network entry or a hard handover procedure in an Orthogonal Frequency Division Multiple Access (OFDMA) network with a method of distinguishing between relay stations and base stations by assigning preamble modulation codes employed in the OFDMA network to one of at least two groups. In this manner, a mobile station attempting to execute a network entry or a hard handover procedure in an OFDMA network can distinguish between relay stations and base stations, thereby ensuring the maximum desired transmission capabilities of the network.

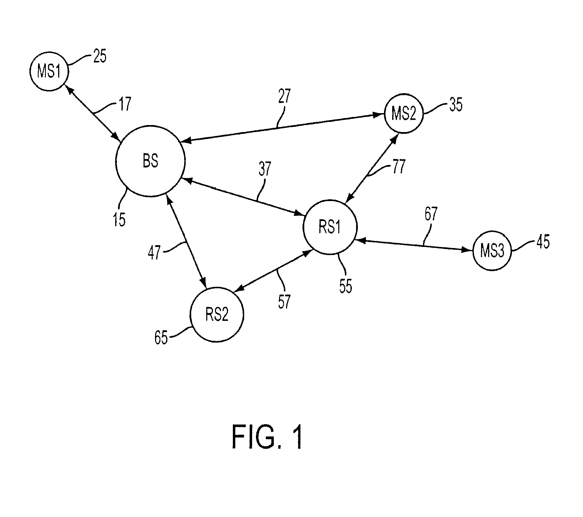

Fig. 1 is an illustrative example of an inter-cell topology involving two relay stations and three mobile stations operating in an OFDMA network. The network cell includes a base station (BS) 15, a first relay station (RS1) 55, a second relay station (RS2) 65, a first mobile station (MS1) 25, a second mobile station (MS2) 35, and a third mobile station (MS3) 45. In this example, mobile station 25 is within range of base station 15, and, therefore, can communicate directly with base station 15 through the MS1-BS link 17. Mobile station 35 is within range of base station 15 and relay station 55 and, therefore, can communicate directly with base station 15 through the MS2-BS link 27, or, in the alternative, can communicate with base station 15 indirectly through relay station 55, using the MS2-RS1 link 77 and the RS1-BS link 37. However, it is preferable that mobile station 35 communicates with base station 15 through direct link 27, since this will provide for the best transmission capabilities and ensure the overall efficiency of the entire network. Mobile station 45 is out of range of base station 15 and, therefore, can only communicate with base station 15 indirectly through relay station 55, using MS3-RS1 link 67 and RS1-BS link 37. In this environment, relay station 65, using network compliant preamble detection circuitry, may detect a set of superimposed preamble signals.

Mobile station 35, while attempting to execute a network entry or re-entry procedure, may attempt to execute a network entry or re-entry procedure (hard handover) with relay station 55, instead of base station 15, because the preamble detector of mobile station 35 receives a preamble signal from relay station 55. As a result, bandwidth efficiency of RS1-BS link 37 is degraded, due to the supplementary data and control traffic requested by mobile station 35. Also, relay station 55 is not capable of providing mobile station 35 with same range of services and capabilities as base station 15.

Various embodiments of the present invention propose a method to manage the OFDMA preamble modulation codes in such a way that a mobile station, such as mobile station 35, attempting to enter or re-enter the network (handover procedure) will be able to differentiate between a base station, such as base station 15, and a relay station, such as relay station 55, by reading the preamble modulation codes without the need to exchange any other control signaling with the network. Considering that the preamble modulation code is detected in the time domain, the detection and the connection decision should take no longer than two frames. Therefore, since this procedure does not require any supplementary exchange of control information, this procedure is the fastest possible, optimizing the network entry and thus improving the overall bandwidth efficiency for a mobile station.

Fig. 1 is only an illustrative example of an inter-cell topology involving a single base station, two relay stations and three mobile stations operating in an OFDMA network. The various embodiments of the present invention are not limited to an OFDMA network including only a single base station, two relays stations, and three mobile stations as illustrated in Fig. 1, but may include any wireless communication network supporting any number of base stations, relay stations, and mobile stations.

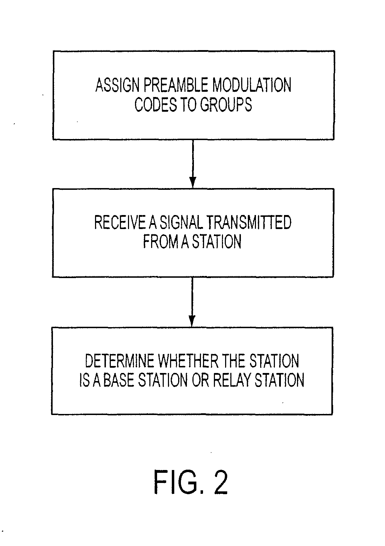

Fig. 2 is a flowchart illustrating a procedure of a mobile station attempting to execute a network entry or a hard handover procedure, according to an embodiment of the present invention. Referring now to Fig. 1, in operation 10, preamble modulation codes in an OFDMA network are assigned to one of at least two groups, one of the groups indicating that codes assigned to the group are for base stations in the network and a different one of the groups indicating that codes assigned to the group are for relay stations in the network.

The OFDMA preamble modulation codes can be Pseudo Noise (PN) sequences and, for example, under the Institute of Electrical and Electronics Engineers (IEEE) 802.16 standard, base stations are designed to use 114 distinct preamble modulation codes, each preamble modulation code being a distinct PN sequence. Furthermore, these 114 PN sequences are represented by cell ID's, which are modulated in the PN sequences and can be numbered 0 through 113. A mobile station attempting to enter the network, or roaming throughout the network, may not be allowed to detect PN sequences transmitted by two base station entities using the same cell ID. If the mobile station detects an identical cell ID, it will not be able to complete the network entry or re-entry procedure. This is provided as an example of an OFDMA network under the 802.16 standard. However, the various embodiments of the present invention are not limited to preamble modulation codes that are PN sequences, and can include any number of preamble modulation codes, which can be represented by any number of cell ID's numbered in any manner.

In order for a distinction to be made between a base station and a relay station, these 114 PN sequences, and their representative cell ID's, must be divided up into at least two groups, with one group indicating that codes assigned to the group are for base stations in the network and a different one of the groups indicating that codes assigned to the group are for relay stations in the network. This re-organization and assignment should not attract any break in the backwards compatibility with other 802.16 networks, thereby making it transparent for any 802.16 OFDMA mobile station. The various embodiments of the present invention are not limited to preamble modulation codes that are assigned into two groups, and can include any number of groups larger than two indicating that codes assigned to each respective group are for any type of entity within the network.

From operation 10, the process moves to operation 20, where the mobile station attempting to enter or re-enter the network receives a signal transmitted from a station in the network, the received signal including a preamble modulation code. As the mobile station enters or re-enters the network, its preamble detector will begin to detect preamble modulation codes from other station entities within the network that are within range of the mobile station.

From operation 20, the process moves to operation 30, where the mobile station determines whether the station that transmitted the received signal is a base station or a relay station based on the group to which the preamble modulation code of the received signal was assigned. At this point, the mobile station is able to distinguish between a base station and a relay station due to the re-organization and assignment of the PN sequences, and related cell ID's, which was carried out in operation 10.

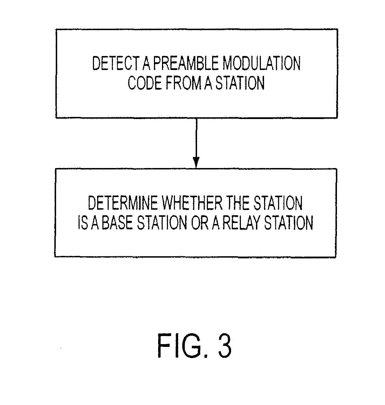

Fig. 3 is a flowchart illustrating a procedure of a mobile station attempting to execute a network entry or a hard handover procedure, according to an embodiment of the present invention. Referring now to Fig. 1, in operation 100, a preamble modulation code of a signal transmitted by a station in an OFDMA network is detected. As the mobile station enters or re-enters the network, its preamble detector will begin the detect preamble modulation codes, from other station entities within the network that are within range of the mobile station.

From operation 100, the process moves to operation 200, where it is determined whether the station is a base station or a relay station based on a group to which the detected preamble modulation code is assigned.

The OFDMA preamble modulation codes can be, for example, Pseudo Noise (PN) sequences and, for example, under the Institute of Electrical and Electronics Engineers (IEEE) 802.16 standard, base stations use 114 distinct PN sequences as preamble modulation codes. Furthermore, these 114 PN sequences are represented by cell ID's, which can be numbered 0 through 113. A mobile station attempting to enter the network, or roaming throughout the network, may not be allowed to detect preamble modulation codes transmitted by a base station entity using the same cell ID and received within a reasonable received signal strength range. If the mobile station detects an identical cell ID, it will not be able to complete the network entry or re-entry procedure. Obviously, this is provided as an example of an OFDMA network under the 802.16 standard. However, the various embodiments of the present invention are not limited to preamble modulation codes that are PN sequences, and can include any number of preamble modulation codes which can be represented by any number of cell ID's numbered in any manner.

Therefore, in order for a distinction to be made between a base station and a relay station, these 114 PN sequences, and their representative cell ID's, are assigned to one of at least two groups, with one group indicating that PN sequences assigned to the group are for base stations in the network and a different one of the groups indicating that PN sequences assigned to the group are for relay stations in the network and a determination is made based on these assigned groups. The various embodiments of the present invention are not limited to preamble modulation codes that are assigned into two groups, and can include any number of groups larger than two indicating that codes assigned to each respective group are for any type of entity within the network.

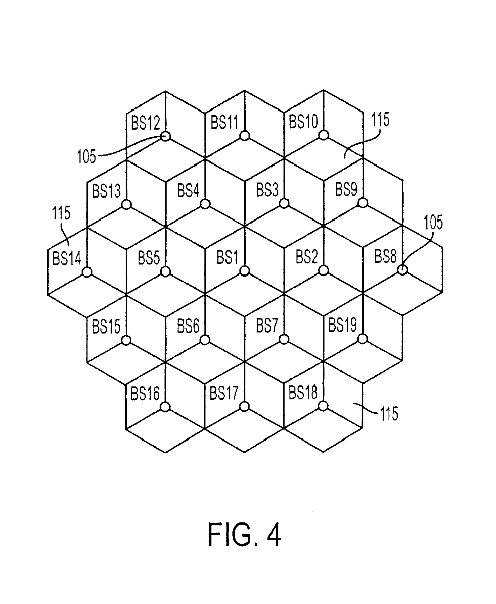

Figs. 4 illustrates an example of a tier 1 +2 wireless network topology for modeling the assignment of preamble modulation codes in an OFDMA network, according to an embodiment of the present invention. In executing this model, it is considered that the minimal distance between two cells using the same ID is 8r, where r is the radius of the cell radius. If the network topology presented in Fig. 4 is a Line-of-Sight (LOS), which is a very conservative case for an urban wireless network, then the related attenuation between two signals received by a given mobile station, from two base stations or relay stations using the same cell ID, shall be:

$$\Delta PathLoss = [32.45 + 20\log(f) + 20\log(r)] - [32.45 + 20\log(f) + 20\log(8r)] =$$

$$-20\log(7) = -16.9\text{dB},$$

where f is the frequency (in MHz), d is the distance (in km), and r is the cell radius. Various embodiments of the present invention are not limited to a tier 1+2 wireless network topology as shown in Fig. 4, and can include any wireless network topology. The tier 1+2 wireless network topology as shown in Fig. 4 is provided only as a model for illustrating the attenuation between two signals received by a given mobile station.

The equation assumes one user positioned between two cells using the same cell ID, operating on the cell edge. Considering that the preamble modulation code is, for example, based on Binary Phase-Shift Keying (BPSK) modulation, using a repetitive time domain structure, the related correlator that forms the preamble detector requires a low received CINR. Depending on the hardware implementation, the related preamble decoder, receiving two preamble sequences transmitted by two base stations or two relay stations using the same cell ID, deployed in a network topology as presented in Fig. 4, will not process the lower level CINR preamble, due to the estimated large received power level difference between the two. Therefore, the CINR degradation provided by the equation provides a negligible impact upon the operation of the regular preamble detector. This is the reason that a tier 1+2 model, like that shown in Fig. 4, is considered suitable for modeling the process of the present application. Again, the various embodiments of the present invention are not limited to a tier 1+2 wireless network topology as shown in Fig. 4, and can include any wireless network topology. Furthermore, the various embodiments of the present invention are not limited to preamble modulation codes based on BPSK modulation and a preamble detector that requires a low received CINR, and can include any type of preamble code modulation and any compliant preamble detector circuitry.

Considering a three sector per cell network frequency plan, as presented in Fig. 4, the tier 1+2 network uses fifty-seven sectors 115 (three sectors per base station times nineteen base stations 105). The actual structure proposed by the 802.16 standard specifies 114 PN sequences and related cell ID's (numbered 0 through 113). Therefore, the number of remaining PN sequences is presented as:

114 PN Sequences – (57 Sectors * 1 PN Sequence per Sector) = 57 Remaining PN Sequences.

As such, 57 PN sequences, and related cell ID's, are designated for indicating and distinguishing base stations within the network, and the remaining 57 PN sequences, and related cell ID's, can be designated for indicating and distinguishing relay stations within the network. The number of PN sequences determined by this equation allows an average number of three relay stations per cell. A service provider could increase the number of relay stations within this network topography above this value, provided that supplementary relay stations have a limited coverage that doesn't allow any interference with the rest of the network topography (e.g. underground, tunnels, etc.) This would minimize the risk of a roaming mobile station detecting the same cell ID during the preamble detection operation. However, the various embodiments of the present invention are not limited to a network frequency plan as shown in the tier 1+2 network of Fig. 4 and are not limited to preamble modulation codes using 114 PN sequences, and can include any number of total preamble modulation codes, base station preamble modulation codes, and relay station preamble modulation codes.

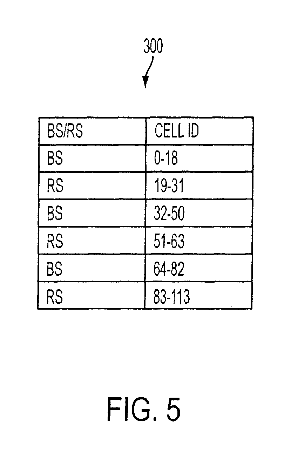

Fig. 5 is chart 300 illustrating the assignment of preamble modulation codes, in this case PN sequences and their relate cell ID's, into groups indicating relation to a base station and groups indicating relation to a relay station, according to an embodiment of the present invention. In this embodiment, Cell ID's 0-18, 32-50, and 64-82 are assigned to groups indicating relation to a base station and Cell ID's 19-31, 51-63, and 83-113 are assigned to groups indicating relation to a relay station. Without changing the original definition of PN sequences defined in 802.16 networks, it is possible to re-assign the PN sequences in this manner. It should be appreciated that Fig. 5 is illustrative of only a single example of a assignment of PN sequences, and their related Cell ID's, and that the assignment could be programmed in any like manner by the service provider of the 802.16 network. Furthermore, the various embodiments of the present invention are not limited to preamble modulation codes in an 802.16 network using 114 PN sequences, and can include any wireless communication network using any number of preamble modulation codes, which can be represented by any number of cell ID's numbered in any manner.

The present invention relates to mobile stations acting in OFDMA networks, and in particular, 802.16 networks. However, the present invention is not limited to any specific types of networks, and the method and apparatus of the mobile station could be applied in various different types of wireless communications networks.

Although a few preferred embodiments of the present invention have been shown and described, it would be appreciated by those skilled in the art that changes may be made in these embodiments without departing from the principles and spirit of the invention, the scope of which is defined in the claims and their equivalents.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A method comprising:

   assigning preamble modulation codes employed in an Orthogonal Frequency Division Multiple Access (OFDMA) network to one of at least two groups, one of the groups indicating that codes assigned to the group are for base stations in the network and a different one of the groups indicating that codes assigned to the group are for relay stations in the network;
   receiving, by a mobile station operating in the network, a signal transmitted from an unidentified station in the network, the received signal including a preamble modulation code; and
   determining, by the mobile station receiving the signal, whether the unidentified station that transmitted the received signal is a base station or a relay station based on the group to which the preamble modulation code of the received signal was assigned.

2. A method comprising:

   detecting, by a mobile station, a preamble modulation code of a signal transmitted by an unidentified station in an Orthogonal Frequency Division Multiple Access (OFDMA) network; and
   determining, by the mobile station, whether the unidentified station is a base station or a relay station based on a group to which the detected preamble modulation code is assigned.

3. The method of claim 1 or 2, wherein the group assignment is modulated in the preamble modulation code.

4. The method of claim 3, wherein the preamble modulation code is a pseudo noise (PN) sequence.

5. The method of any of the preceding claims, wherein the OFDMA network is a network under the Institute of Electrical and Electronics Engineers (IEEE) 802.16 standard.

6. The method of claim 5, wherein the network is modeled as a Tier 1 plus Tier 2 network including a total of 19 base stations representing 57 sectors, each sector being represented by a distinct PN sequence from an associated base station.

7. The method of claim 6, wherein:

specific PN sequences are assigned to a group indicating assignment to a base station in the network; and PN sequences other than the specific PN sequences are assigned to a group indicating assignment to a relay station in the network.

8. A mobile station comprising:

   means for detecting, by the mobile station, a PN sequence of a signal transmitted by an unidentified station in an Orthogonal Frequency Division Multiple Access (OFDMA) network; and
   means for determining, by the mobile station, whether the unidentified station is a base station or a relay station based on a group to which the detected PN sequence was assigned.

9. A computer program, which when executed on a computing device, carries out the method of any of the preceding method claims.

FIG. 1

```
┌─────────────────────────────────┐
│   ASSIGN PREAMBLE MODULATION     │
│        CODES TO GROUPS           │
└─────────────────────────────────┘
                 │
                 ▼
┌─────────────────────────────────┐
│   RECEIVE A SIGNAL TRANSMITTED   │
│         FROM A STATION           │
└─────────────────────────────────┘
                 │
                 ▼
┌─────────────────────────────────┐
│  DETERMINE WHETHER THE STATION   │
│ IS A BASE STATION OR RELAY STATION│
└─────────────────────────────────┘
```

FIG. 2

FIG. 3

FIG. 4

300

| BS/RS | CELL ID |
|-------|---------|
| BS | 0-18 |
| RS | 19-31 |
| BS | 32-50 |
| RS | 51-63 |
| BS | 64-82 |
| RS | 83-113 |

FIG. 5

**EP 1 919 141 A1**

European Patent Office

**EUROPEAN SEARCH REPORT**

Application Number

EP 07 11 7580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | K. LOA ET AL: "Comment to C80216j-06_057 Proposal for Requirement that RS Transmits Preamble" IEEE C802.16J-06/089R2, [Online] 26 September 2006 (2006-09-26), pages 1-18, XP002473363 Retrieved from the Internet: URL:http://grouper.ieee.org/groups/802/16/relay/contrib/C80216j-06_089r2.pdf> [retrieved on 2008-03-18] * page 5 - page 6 * * page 8 * * page 17 - page 18 * | 1-9 | INV. H04L12/56 |
| A | US 2006/078040 A1 (SUNG SANG-HOON [KR] ET AL SEOK ET AL) 13 April 2006 (2006-04-13) * paragraph [0003] - paragraph [0005] * * paragraph [0012] - paragraph [0014] * * figures 1,2A,2B * | 1-9 | |
| A | WO 2006/054825 A (KOREA ELECTRONICS TELECOMM [KR]; SAMSUNG ELECTRONICS CO LTD [KR]; KT C) 26 May 2006 (2006-05-26) * paragraph [0032] - paragraph [0037] * * figure 2 * | 1,2,8,9 | TECHNICAL FIELDS SEARCHED (IPC) H04L |
| A | EP 1 675 340 A (SAMSUNG ELECTRONICS CO LTD [KR]) 28 June 2006 (2006-06-28) * abstract * * paragraph [0001] - paragraph [0007] * * figures 1,3 * | 1,2,8,9 | |

-/--

The present search report has been drawn up for all claims

| Place of search | Date of completion of the search | Examiner |
|---|---|---|
| Munich | 19 March 2008 | Rosenauer, Hubert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**European Patent Office**

**EUROPEAN SEARCH REPORT**

Application Number

EP 07 11 7580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | C. FRASER ET AL: "Proposed modifications to the PN sequence used by the Base Stations and Relay stations in a MR enabled network" IEEE C80216J-06/150, [Online] 8 November 2006 (2006-11-08), pages 1-23, XP002473364 Retrieved from the Internet: URL:http://grouper.ieee.org/groups/802/16/relay/contrib/C80216j-06_150.pdf> [retrieved on 2008-03-18] * page 1 - page 3 * * figure 1 * | 1-5 | |

TECHNICAL FIELDS
SEARCHED        (IPC)

The present search report has been drawn up for all claims

| Place of search | Date of completion of the search | Examiner |
|---|---|---|
| Munich | 19 March 2008 | Rosenauer, Hubert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 07 11 7580

This annex lists the patent family members relating to the patent documents cited in  the above-mentioned European search report.
The members are as contained in the European Patent Office EDP file on
The European Patent Office is in no way liable for these particulars which are merely given for the purpose of information.

19-03-2008

| Patent document cited in search report | | Publication date | Patent family member(s) | | Publication date |
|---|---|---|---|---|---|
| US 2006078040 | A1 | 13-04-2006 | KR | 20060032379 A | 17-04-2006 |
| WO 2006054825 | A | 26-05-2006 | KR<br>US | 20060055864 A<br>2007291861 A1 | 24-05-2006<br>20-12-2007 |
| EP 1675340 | A | 28-06-2006 | CN<br>JP<br>KR<br>US | 1794850 A<br>2006180518 A<br>20060071766 A<br>2006133321 A1 | 28-06-2006<br>06-07-2006<br>27-06-2006<br>22-06-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 60856041 A